# EUROPÄISCHE PATENTSCHRIFT

(11) **EP 4 073 186 B1**
(45) Veröffentlichungstag und Bekanntmachung des Hinweises auf die Patenterteilung: **19.04.2023**
(21) Anmeldenummer: 19821071.8
(22) Anmeldetag: 11.12.2019
(51) Int. Cl.: C09D 183/08, C03C 13/06, C03C 25/40

(54) **HYDROPHOBE MINERALISCHE DÄMMSTOFFE**
HYDROPHOBIC MINERAL INSULATING MATERIALS
MATÉRIAUX ISOLANTS MINÉRAUX HYDROPHOBES

(43) Veröffentlichungstag der Anmeldung: 19.10.2022
(73) Patentinhaber: Wacker Chemie AG, 81737 München (DE)
(72) Erfinder: JANTKE, Dominik, 84489 Burghausen (DE); SCHRÖCK, Robert, 84503 Altötting (DE)
(74) Vertreter: Fritz, Helmut
(86) Internationale Anmeldenummer: PCT/EP2019/084712
(87) Internationale Veröffentlichungsnummer: WO 2021/115593

(56) Entgegenhaltungen:
- WO-A1-2019/204353
- DE-A1-102009 054 566
- US-A1- 2012 319 029

## Beschreibung

Die Erfindung betrifft hydrophobe mineralische Dämmstoffe enthaltend mindestens eine aminofunktionelle Organosiliciumverbindung mit einer Aminzahl im Bereich von 0,05 bis 0,40 sowie ein Verfahren zu ihrer Herstellung und die Verwendung von aminofunktionellen Organosiliciumverbindungen mit einer Aminzahl im Bereich von 0,05 bis 0,40 zur Hydrophobierung von mineralischen Dämmstoffen.

Über die Notwendigkeit mineralischer Dämmstoffe und die Vorteile ist beispielsweise in DE102009054566A1 referiert.

Ein typischer mineralischer Dämmstoff ist zum Beispiel Mineralwolle. Mineralwolle wird aus der Schmelze hergestellt, Verfahren hierzu sind hinlänglich bekannt, z.B. WO2019/025706. Das oder die Bindemittel sowie die hydrophobierende Komponente und Staubbinder und gegebenenfalls weitere Komponenten werden in der Regel direkt nach dem Schritt der Faserbildung an sogenannten Spinnern auf die noch heißen Fasern gesprüht.

Mineralwolle in frisch hergestelltem Zustand ist grundsätzlich hydrophil. Dies ist insbesondere dann der Fall, wenn auf den Einsatz von Phenol-Formaldehyd-Harz-basierten Bindern verzichtet wird. Der Einsatz von "grünen Bindern" basierend auf organischen, nachwachsenden Rohstoffen, wie beispielsweise Stärke (z.B. WO2019/025672A1, Saint-Gobain), sowie der Verzicht auf Binder für die sogenannte "Blowing Wool" (z.B. WO2014/044900A1, Acoustic Scandinavia) für Einblasdämmung ist aufgrund der deutlich nachhaltigeren Fahrweise ein großer Trend in der Industrie.

Mineralwolle wird vor dem Einsatz als Isoliermaterial in der Regel hydrophob ausgestattet. Dies kann zum Beispiel durch reaktive oder nicht reaktive Organosiliciumverbindungen, in der Regel Polydimethylsiloxane oder Siliconharze durchgeführt werden. In CN104402211A wird der Einsatz von SILRES^{®} BS 1042 beschrieben, einer wässrigen Emulsion eines Polydimethylsiloxans. In WO2019/043078A1 wird der Einsatz von SILRES^{®} BS 45 beschrieben, einer lösemittelfreien Siliconharzemulsion.

Die eingesetzten Organosiliciumverbindungen weisen jedoch eine geringe Wechselwirkung mit den mineralischen Fasern auf. Um eine homogene Belegung zu erzielen, muss daher direkt nach dem Herstellungsprozess der Fasern das Hydrophobierungsmittel aufgebracht werden, insbesondere wenn die Faser sehr heiß ist, um die Emulsion zu brechen und das Silicon möglichst homogen auf der Faser zu verteilen. Die Dosierung muss zudem relativ hoch gewählt werden.

Das Dokument WO 2019/204353 offenbart Dämmstoffe, die ein Polymer oder Copolymer von 3-Aminopropylmethylsiloxan enthalten. Die Aminzahl wird jedoch nicht erwähnt. Das Dokument US 2012/319029 offenbart Dämmstoffe, die ein Aminopropylpolydimethylsiloxan mit einer Aminzahl von 3 enthalten.

Überraschenderweise wurde nun gefunden, dass der Einsatz von aminofunktionellen Organosiliciumverbindungen mit einer Aminzahl im Bereich von 0,05 bis 0,40, insbesondere in Form von Emulsionen, zur Hydrophobierung von mineralischen Dämmstoffen diese Probleme im Stand der Technik löst. So wird durch den Einsatz entsprechender Emulsionen eine sehr gute und homogene Verteilung der hydrophobierenden Komponente auf den mineralischen Fasern erreicht und außerdem aufgrund der hohen Wechselwirkung eine langanhaltende Hydrophobierung erzielt. Es findet zudem eine schnelle Belegung der Oberfläche statt, und es ist kein "Brechen" der Emulsion durch zügiges Verdampfen des Lösungsmittels notwendig. Daher kann die Behandlung von mineralischen Dämmstoffen sowohl bei hohen Temperaturen als auch bei niedrigeren Temperaturen durchgeführt werden. Das bedeutet, dass die Hydrophobierung auch unabhängig vom Herstellungsprozess der mineralischen Dämmstoffe durchgeführt werden kann. Zudem kann optional auf den Einsatz eines Haftvermittlers verzichtet werden.

Ein Gegenstand der Erfindung sind hydrophobe mineralische Dämmstoffe enthaltend mindestens eine aminofunktionelle Organosiliciumverbindung mit einer Aminzahl im Bereich von 0,05 bis 0,40.

Unter mineralischen Dämmstoffen sind sowohl solche natürlichen als auch synthetischen Ursprungs zu verstehen. Beispiele sind Blähton, Calciumsilikate wie Vermiculit, Mineralschaum, Perlite, Schaumglas, Mineralwollen wie Steinwolle und Glaswolle. Diese Materialien werden üblicherweise in Form von Fasern, Granulaten, Matten, Platten oder sonstigen Formteilen zur Dämmung eingesetzt.

Zu den Mineralwolldämmstoffen zählen z.B. künstliche Glasfasern, Glasfasern, keramische Fasern, Basaltfasern, Steinfasern, etc.

Die Mineralwolldämmstoffe können in beliebiger Form vorliegen, z.B. als Platten, Matten, oder für die Einblasdämmung als binderfreie Variante als sogenannte "Blowing Wool".

Bevorzugt wird als mineralischer Dämmstoff Mineralwolle eingesetzt, besonders bevorzugt wird als mineralischer Dämmstoff Glaswolle, Steinwolle und "Blowing Wool" eingesetzt.

Die mineralischen Dämmstoffe können Bindemittel enthalten oder frei von Bindemitteln sein, die Gegenwart von Bindemittel hat keinen Einfluss auf den technischen Effekt der Erfindung. Typische Bindemittel, z.B. für Glas- oder Steinwolle, sind Phenol-Formaldehyd, Melamin-Formaldehyd, oder Kohlenhydratbasierte Binder (z.B. auf Stärke-Basis). Zusätzlich können die mineralischen Dämmstoffe optional weitere Komponenten wie Staubbinder, z.B. in Form von Mineralölemulsionen, oder Haftvermittler, wie z.B. Silane mit Amino-Seitenketten oder Silane mit Glycidoxy-Seitenketten oder Silane mit Ureido-Seitenketten, enthalten.

Die aminofunktionelle Organosiliciumverbindung muss eine Aminzahl im Bereich von 0,05 bis 0,40 aufweisen. Bevorzugt liegt die Aminzahl in einem Bereich von 0,10 bis 0,20.

Unter Aminzahl versteht man per Definition die Menge Kaliumhydroxid (KOH) in mg, die dem Aminanteil von 1 g Substanz gleichgesetzt ist. Diese kann beispielsweise durch potentiometrische Titration oder Titration gegen Bromphenolblau, wie in der DIN 53176 beschrieben, bestimmt werden. Bei Mischungen von aminofunktionellen Organosiliciumverbindungen ergibt sich somit eine mittlere Aminzahl für die Mischung.

Die aminofunktionelle Organosiliciumverbindung kann eine oligomere oder polymere Organosiliciumverbindung sein, sie kann linear oder verzweigt sein. Die Aminogruppen können statistisch im Molekül verteilt sein oder endständig angeordnet sein. Es können weitere reaktive Gruppen wie beispielsweise hydrolysierbare Gruppen enthalten sein (z.B. Alkoxy-Gruppen).

Bevorzugt ist die aminofunktionelle Organosiliciumverbindung mindestens eine Verbindung der Formel **(I)**

**(SiO_{4/2})ₐ(R¹SiO_{3/2})_{b}(R²SiO_{3/2})_{b'}(R¹₂SiO_{2/2})_{c}(R¹R²SiO_{2/2})_{c'}(R²₂SiO_{2/2})_{c"}(R¹₃ SiO_{1/2})_{d}(R¹₂R²SiO_{1/2})_{d'}(R¹R²₂SiO1_{/2})_{d"}(R²₃SiO_{1/2})_{d‴}** **(I)**,

worin
die Indices **a, b, b', c, c', c", d, d', d"** und **d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d', d", d‴** zusammen mindestens den Wert 2 annimmt und wenigstens einer der Indices **b', c', c", d', d"** oder **d‴** ungleich 0 ist; und
worin die Reste **R¹** unabhängig voneinander ein unsubstituierter oder mit mindestens einem Fluor-, Chlor- oder Bromatom oder einer C₁-C₅-Alkoxygruppe substituierter C₁-C₁₈-Kohlenwasserstoffrest sind,
und worin die Reste **R²** eine Gruppe der allgemeinen Formel **(II)** bedeuten

**-R-[NR'(CH₂)ₙ]ₐN(R')₂** **(II),**

worin
der Index **n** die Werte 2,3,4,5, oder 6 annimmt,
der Index **a** die Werte 0,1,2,3, oder 4 annimmt,
der Rest **R** ein zweiwertiger, linearer, unverzweigter oder verzweigter C₁-C₁₈-Kohlenwasserstoffrest ist,
die Reste **R'** unabhängig voneinander ausgewählt sind aus der Gruppe bestehend aus (i) Wasserstoff, (ii) unsubstituierter oder mit mindestens einem Fluor-, Chlor- oder Bromatom oder einer Hydroxygruppe oder einer C₁-C₅-Alkoxygruppe substituierter C₁-C₁₈-Kohlenwasserstoffrest, oder (iii) unsubstituierter oder mit mindestens einem Fluor-, Chlor- oder Bromatom oder einer Hydroxygruppe oder einer C₁-C₅-Alkoxygruppe substituierter C₁-C₁₈-Acylrest.

Besonders bevorzugt wird eine aminofunktionelle Organosiliciumverbindung eingesetzt für die gilt: in Formel **(I)** sind die Reste **R¹** unabhängig voneinander ein C₁-C₆-Alkylrest, insbesondere ein Methylrest; und in Formel **(II)** nimmt der Index **a** den Wert 1 an, der Index **n** nimmt den Wert 2 an, die Reste **R'** sind Wasserstoff, und der Rest **R** ist ein zweiwertiger C₁-C₆-Kohlenwasserstoffrest, insbesondere ein Propylenrest.

Aminofunktionelle Organosiliciumverbindungen an sich sind bekannt und können unter anderem wie in EP1580215 oder DE2339761 beschrieben hergestellt werden, z.B. durch Reaktion von Silanol-terminierten Silanen oder Polydimethylsiloxanen mit aminofunktionellen Silanen.

Aminofunktionelle Organosiliciumverbindungen sind auch kommerziell erhältlich, z.B. als Silikonöle oder in Form von Emulsionen. Aminofunktionelle Organosiliciumverbindungen mit einer Aminzahl im Bereich von 0,05 bis 0,40 sind als Emulsionen kommerziell erhältlich wie z.B. SILRES^{®} BS 1340 von der Wacker Chemie AG.

Ein weiterer Gegenstand der Erfindung ist die Verwendung von aminofunktionellen Organosiliciumverbindungen mit einer Aminzahl im Bereich von 0,05 bis 0,40 zur Hydrophobierung von mineralischen Dämmstoffen.

Bevorzugt sind die mineralischen Dämmstoffe ausgewählt aus Blähton, Calciumsilikaten wie Vermiculit, Mineralschaum, Perliten, Schaumglas, Mineralwollen wie Steinwolle und Glaswolle. Bevorzugt wird zur Hydrophobierung von mineralischen Dämmstoffen die aminofunktionelle Organosiliciumverbindung in Form von wässrigen Emulsionen eingesetzt.

Ein weiterer Gegenstand ist ein Verfahren zur Herstellung der hydrophoben mineralischen Dämmstoffe umfassend die Schritte:
(a) Bereitstellung einer wässrigen Emulsion enthaltend mindestens eine aminofunktionelle Organosiliciumverbindung mit einer Aminzahl im Bereich von 0,05 bis 0,40,
(b) Inkontaktbringen eines mineralischen Dämmstoffs mit der Emulsion nach (a), und
(c) Trocknung.

Das Bereitstellen einer Emulsion umfasst sowohl das Herstellen einer entsprechenden Emulsion als auch die Verwendung von kommerziell erhältlichen Emulsionen. Kommerziell erhältliche Emulsionen können unverändert eingesetzt werden, sie können aber auch verdünnt werden oder der pH-Wert kann verändert werden.

Emulsionen enthaltend mindestens eine aminofunktionelle Organosiliciumverbindung mit einer Aminzahl im Bereich von 0,05 bis 0,40 basieren üblicherweise auf den folgenden Komponenten:
(A) mindestens eine aminofunktionelle Organosiliciumverbindung mit einer Aminzahl im Bereich von 0,05 bis 0,40,
(B) Wasser,
(C) optional weitere Bestandteile, wie beispielsweise Emulgatoren, Säuren, Biozide, Verdicker, Filmbildner, Konservierungsmittel, Silane.

Bevorzugte Emulsionen basieren üblicherweise auf den folgenden Komponenten:
(A) mindestens eine aminofunktionelle Organosiliciumverbindung mit einer Aminzahl im Bereich von 0,05 bis 0,40,
(B) mindestens ein Emulgator, z.B. mindestens ein nichtionischer, anionischer, kationischer, oder amphoterer Emulgator, und
(C) Wasser,
(D) mindestens eine organische oder anorganische Säure,
(E) optional weitere Bestandteile, wie beispielsweise Biozide, Verdicker, Filmbildner, Konservierungsmittel, Silane.

Als Emulgatoren können alle bisher bekannten, anionischen, nichtionischen, kationischen oder amphoteren Emulgatoren sowohl einzeln als auch als Mischungen verschiedener Emulgatoren verwendet werden, mit denen auch bisher wässrige Emulsionen von Organopolysiloxanen hergestellt werden konnten.

### Beispiele für anionische Emulgatoren sind:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid- (EO-) bzw. Propylenoxid-einheiten (PO-).
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

### Beispiele für nichtionische Emulgatoren sind:

5. Polyvinylalkohol, der noch 5 bis 50 %, vorzugsweise 8 bis 20 % Vinylacetateinheiten aufweist, mit einem Polymerisationsgrad von 500 bis 3000.
6. Alkylpolyglycolether, vorzugsweise solche mit 3 bis 40 EO-Einheiten und Alkylresten von 8 bis 20 C-Atomen.
7. Alkylarylpolyglycolether, vorzugsweise solche mit 5 bis 40 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 40 EO- bzw. PO-Einheiten.
9. Additionsprodukte von Alkylaminen mit Alkylresten von 8 bis 22 C-Atomen mit Ethylenoxid oder Propylenoxid.
10. Fettsäuren mit 6 bis 24 C-Atomen.
11. Alkylpolyglykoside der allgemeinen Formel R"-O-Z_{O}, worin R" einen linearen oder verzweigten, gesättigten oder ungesättigten Alkylrest mit im Mittel 8 - 24 C-Atomen und Z_{O} einen Oligoglykosidrest mit im Mittel o = 1 - 10 Hexose- oder Pentoseeinheiten oder Gemischen davon bedeuten.
12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
13. Polare Gruppen, enthaltend insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.

### Beispiele für kationische Emulgatoren sind:

14. Salze von primären, sekundären und tertiären Fettaminen mit 8 bis 24 C-Atomen mit Essigsäure, Schwefelsäure, Salzsäure und Phosphorsäuren.
15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.
16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

### Als amphotere Emulgatoren eignen sich besonders:

17. Langkettig substituierte Aminosäuren, wie N-Alkyl-di-(aminoethyl-)glycin oder N-Alkyl-2-aminopropionsäuresalze.
18. Betaine, wie N-(3-Acylamidopropyl)-N,N-dimethylammonium-salze mit einem C₈-C₁₈-Acylrest und Alkyl-imidazolium-Betaine oder quaternisierte Alkyl oder substituierte Alkylderivate des N,N-Dimethyl-Glycins.

Bevorzugt als Emulgatoren sind nichtionische Emulgatoren, insbesondere die vorstehend unter 5. und 6. aufgeführten Polyvinylalkohole oder Alkylpolyglycolether.

Der Emulgator kann aus einem der oben genannten Emulgatoren oder aus einem Gemisch zweier oder mehrerer dieser Emulgatoren bestehen, er kann in reiner Form oder als Lösungen eines oder mehrerer Emulgatoren in Wasser oder organischen Lösungsmitteln eingesetzt werden.

Der Emulgator kann vorzugsweise in Mengen in einem Bereich von 0,1 bis 60 Gew.-%, besonders bevorzugt in einem Bereich von 0,5 bis 30 Gew.-%, jeweils bezogen auf das Gesamtgewicht an aminofunktionellen Organosiliciumverbindungen, eingesetzt werden.

Die Emulsionen können nach allen gängigen Standardverfahren hergestellt werden.

Als Silane können alle dem Fachmann als Haftvermittler geläufigen Silane eingesetzt werden. Dies können insbesondere Silane mit Amino-Seitenketten oder Silane mit Glycidoxy-Seitenketten oder Silane mit Ureido-Seitenketten sein.

Das Inkontaktbringen kann durch alle dem Fachmann bekannten gängigen Techniken erfolgen, wie beispielsweise durch Sprühen, Tauchen, Bestreichen, Begießen, etc.. Bevorzugt erfolgt das Inkontaktbringen durch Sprühen oder Tauchen. Das Inkontaktbringen kann einmal oder mehrfach erfolgen, dabei kann dieselbe oder auch eine andere Emulsion verwendet werden.

Die Trocknung kann durch alle dem Fachmann bekannten gängigen Techniken erfolgen, wie beispielsweise Lufttrocknung, Infrarot, Kontakttrocknung, oder insbesondere Umlufttrocknung.

Der pH-Wert der Emulsion liegt üblicherweise in einem Bereich von 3 - 9, bevorzugt liegt der pH-Wert im leicht sauren Bereich von 4 - 6.

Der Aktivgehalt der eingesetzten Emulsion ist nicht essentiell. Der Aktivgehalt von kommerziell erhältlichen Emulsionen liegt üblicherweise in einem Bereich von 20 Gew.-% bis 70 Gew.-%. Vor dem Inkontaktbringen kann auch eine Verdünnung der Emulsion mit Wasser und/oder den oben genannten Komponenten wie beispielsweise Bindemittel, Staubbinder oder weiteren Komponenten erfolgen. Die Emulsion sollte beim Inkontaktbringen einen Aktivgehalt von mindestens 0,01 Gew.-% aufweisen, bevorzugt 0,1 Gew.%.

Der mineralische Dämmstoff kann in beliebiger Form vorliegen, z.B. als binderfreie Mineralwolle ("Blowing Wool"), als binderhaltige Fasern, als Matten, als Platten oder als sonstige Formkörper.

Die aminofunktionelle Organosiliciumverbindung ist bevorzugt mindestens eine Verbindung der allgemeinen Formel (I)

**(SiO_{4/2})ₐ(R¹SiO_{3/2})_{b}(R²SiO_{3/2})_{b},(R¹₂SiO_{2/2})_{c}(R¹R²SiO_{2/2})_{c'} (R²₂SiO_{2/2})_{c"}(R¹₃SiO_{1/2})_{d}(R¹₂R²SiO_{1/2})_{d'}(R¹R²₂SiO1_{/2})_{d"} (R²₃SiO_{1/2})_{d‴}** **(I)** ,

worin
die Indices **a, b, b`, c, c', c", d, d', d"** und **d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d', d", d‴** zusammen mindestens den Wert 2 annimmt und wenigstens einer der Indices **b', c', c", d', d"** oder **d‴** ungleich 0 ist; und
worin die Reste **R¹** unabhängig voneinander ein unsubstituierter oder mit mindestens einem Fluor-, Chlor- oder Bromatom oder einer C₁-C₅-Alkoxygruppe substituierter C₁-C₁₈-Kohlenwasserstoffrest sind,
und worin die Reste **R²** eine Gruppe der allgemeinen Formel **(II)** bedeuten

**-R-[NR'(CH₂)ₙ]ₐN(R')₂** **(II),**

worin
der Index **n** die Werte 2,3,4,5, oder 6 annimmt,
der Index **a** die Werte 0,1,2,3, oder 4 annimmt,
der Rest **R** ein zweiwertiger, linearer, unverzweigter oder verzweigter C₁-C₁₈-Kohlenwasserstoffrest ist,
die Reste **R'** unabhängig voneinander ausgewählt sind aus der Gruppe bestehend aus (i) Wasserstoff, (ii) unsubstituierter oder mit mindestens einem Fluor-, Chlor- oder Bromatom oder einer Hydroxygruppe oder einer C₁-C₅-Alkoxygruppe substituierter C₁-C₁₈-Kohlenwasserstoffrest, oder (iii) unsubstituierter oder mit mindestens einem Fluor-, Chlor- oder Bromatom oder einer Hydroxygruppe oder einer C₁-C₅-Alkoxygruppe substituierter C₁-C₁₈-Acylrest.

Durch die Wahl der Aminzahl in einem Bereich von 0,05 bis 0,40 kommt es auch bei (moderater) thermischer Belastung zu keiner oder nur zu einer geringen Verfärbung der mineralischen Dämmstoffe. Durch den Einsatz von aminofunktionellen Organosiliciumverbindungen kann optional auf einen zusätzlichen Haftvermittler verzichtet werden. Zudem eröffnet sich mit dem erfindungsgemäßen Verfahren die Möglichkeit der Nachbehandlung von bereits hergestellter Mineralwolle.

### Beispiele

Die in den Beispielen und Vergleichsbeispielen eingesetzten Emulsionen sind kommerziell erhältliche Produkte der WACKER Chemie AG:
**SILRES^{®} BS 1042:** wässrige Emulsion eines OH-terminierten, reaktiven Polydimethylsiloxans, Aktivgehalt 60 Gew.-%.
**SILRES^{®} BS 1052:** wässrige Emulsion eines Trimethylsilylterminierten, nicht reaktiven Polydimethylsiloxans, Aktivgehalt 60 Gew.-%.
**SILRES^{®} BS 1340 (pH 7):** wässrige Emulsion eines aminofunktionellen Polydimethylsiloxans, Aktivgehalt 60 Gew.-%.
**SILRES^{®} BS 1340 (pH 5):** wässrige Emulsion eines aminofunktionellen Polydimethylsiloxans, Aktivgehalt 60 Gew.-%. Der pH-Wert wurde für die Beispiele mit Essisäure auf 5 eingestellt.

### Messung des Kontaktwinkels

Die Messung des Kontaktwinkels erfolgte mit einem Gerät der Firma KRÜSS DSA 30. Für die Messung des Kontaktwinkels wurden jeweils 8 Tropfen Wasser auf den Probekörper aufgesetzt und der Kontaktwinkel bestimmt.

### Bestimmung der Hydrophobierung einer Glasoberfläche

Um die schnelle und homogene Ausprägung der Hydrophobie einer Glasoberfläche nachzustellen, wurden Glasobjektträger (Thermo Scientific, Menzel Gläser Superforst^{®}, geschliffen 45°) in verdünnte Emulsionen eingetaucht. Alle Emulsionen wurden vor der Verwendung auf einen Aktivgehalt von 2 Gew.-% mit Wasser verdünnt. Die Ergebnisse sind in Tabelle 1 dargestellt.

Die Versuche sind für die Nachstellung der Hydrophobierung von Mineralwolloberflächen geeignet.

**Tabelle 1:**

| | **Emulsion** | **Kommentar** | **pH** | **Eintauchdauer / Temp. der Glasplatte** | **Kontaktwinkel** |
|---|---|---|---|---|---|
| VB1 | - | Messung des Kontaktwinkels auf der Glasplatte | | | 31° |
| Beispiel 1 | SILRES^{®} BS 1340 | Aminofunktionelle PDMS-Emulsion | 7 | 10 sec/RT | 94° |
| Beispiel 2 | SILRES^{®} BS 1340 | Aminofunktionelle PDMS-Emulsion | 5 | 10 sec/RT | 103° |
| Beispiel 3 | SILRES^{®} BS 1340 | Aminofunktionelle PDMS-Emulsion | 5 | 30 sec/RT | 104° |
| Beispiel 4 | SILRES^{®} BS 1340 | Aminofunktionelle PDMS-Emulsion | 5 | 2 sec/100°C | 103° |
| VB2 | SILRES^{®} BS 1042 | Emulsion mit reaktivem PDMS | 7 | 10 sec/RT | 48° |
| VB3 | SILRES^{®} BS 1042 | Emulsion mit reaktivem PDMS | 7 | 2 sec/100°C | 60° |
| VB4 | SILRES^{®} BS 1052 | Emulsion mit nichtreaktivem PDMS | 7 | 10 sec/RT | 41° |

Die aminofunktionelle Emulsion SILRES^{®} BS 1340 zeigt eine sehr schnelle und starke Ausprägung der Hydrophobie, welche insbesondere bei einem leicht sauren pH-Wert besonders stark ausgeprägt ist.

Die Beispiele (1-4) zeigen ein sehr gutes Spreitverhalten, also eine sehr gute und schnelle Verteilung direkt auf der mineralischen Oberfläche. Es ergibt sich eine sehr gute Langzeithydrophobie durch die hohe Wechselwirkung mit der mineralischen Oberfläche.

## Patentansprüche

1. Hydrophobe mineralische Dämmstoffe enthaltend mindestens eine aminofunktionelle Organosiliciumverbindung mit einer wie in der Beschreibung definierten Aminzahl im Bereich von 0,05 bis 0,40.

2. Hydrophobe mineralische Dämmstoffe nach Anspruch 1, wobei die aminofunktionelle Organosiliciumverbindung mindestens eine Verbindung der allgemeinen Formel **(I)**
**(SiO_{4/2})ₐ(R¹SiO_{3/2})_{b}(R²SiO_{3/2})_{b'}(R¹₂SiO_{2/2})_{c}(R¹R²SiO_{2/2})_{c'} (R²₂SiO_{2/2})_{c"}(R¹₃SiO_{1/2})_{d}(R¹₂R²SiO_{1/2})_{d'}(R¹R²₂SiO1_{/2})_{d"} (R²₃SiO_{1/2})_{d‴}** **(I),**
ist, worin
die Indices a, **b, b',** c, **c', c", d, d', d"** und **d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d', d", d‴** zusammen mindestens den Wert 2 annimmt und wenigstens einer der Indices **b', c', c", d', d"** oder **d‴** ungleich 0 ist; und
worin die Reste **R¹** unabhängig voneinander ein unsubstituierter oder mit mindestens einem Fluor-, Chlor- oder Bromatom oder einer C₁-C₅-Alkoxygruppe substituierter C₁-C₁₈-Kohlenwasserstoffrest sind,
und worin die Reste **R²** eine Gruppe der allgemeinen Formel **(II)** bedeuten
**-R-[NR'(CH₂)ₙ]ₐN(R')₂** **(II),**
worin
der Index **n** die Werte 2,3,4,5, oder 6 annimmt,
der Index **a** die Werte 0,1,2,3, oder 4 annimmt,
der Rest **R** ein zweiwertiger, linearer, unverzweigter oder verzweigter C₁-C₁₈-Kohlenwasserstoffrest ist,
die Reste **R'** unabhängig voneinander ausgewählt sind aus der Gruppe bestehend aus (i) Wasserstoff, (ii) unsubstituierter oder mit mindestens einem Fluor-, Chlor- oder Bromatom oder einer Hydroxygruppe oder einer C₁-C₅-Alkoxygruppe substituierter C₁-C₁₈-Kohlenwasserstoffrest, oder (iii) unsubstituierter oder mit mindestens einem Fluor-, Chlor- oder Bromatom oder einer Hydroxygruppe oder einer C₁-C₅-Alkoxygruppe substituierter C₁-C₁₈-Acylrest.

3. Hydrophobe mineralische Dämmstoffe nach Anspruch 2, wobei gilt: in Formel **(I)** sind die Reste **R¹** unabhängig voneinander ein C₁-C₆-Alkylrest; und in Formel **(II)** nimmt der Index **a** den Wert 1 an, der Index **n** nimmt den Wert 2 an, die Reste **R'** sind Wasserstoff, und der Rest **R** ist ein zweiwertiger C₁-C₆-Kohlenwasserstoffrest.

4. Verwendung von aminofunktionellen Organosiliciumverbindungen mit einer wie in der Beschreibung definierten Aminzahl im Bereich von 0,05 bis 0,40 zur Hydrophobierung von mineralischen Dämmstoffen.

5. Verwendung nach Anspruch 4, wobei die mineralischen Dämmstoffe ausgewählt sind Blähton, Calciumsilikaten wie Vermiculit, Mineralschaum, Perliten, Schaumglas, Mineralwollen wie Steinwolle und Glaswolle.

6. Verwendung nach Anspruch 4 oder 5, wobei die aminofunktionellen Organosiliciumverbindungen in Form von Emulsionen eingesetzt werden.

7. Verfahren zur Hydrophobierung von mineralischen Dämmstoffen umfassend die Schritte
a) Bereitstellung einer wässrigen Emulsion enthaltend mindestens eine aminofunktionelle Organosiliciumverbindung mit einer Aminzahl im Bereich von 0,05 bis 0,40,
b) Inkontaktbringen eines mineralischen Dämmstoffs mit einer Emulsion nach (a), und
c) Trocknung.

8. Verfahren nach Anspruch 7 wobei der Aktivgehalt der Emulsion mindestens 0,01 Gew.-% beträgt.

9. Verfahren nach Anspruch 7 oder 8, wobei der pH-Wert der Emulsion 3-9 beträgt.

10. Verfahren nach einem der Ansprüche 7-9, wobei der mineralische Dämmstoff in Form von binderfreier Mineralwolle ("Blowing Wool"), als binderhaltige Fasern, als Matten, als Platten oder als sonstiger Formkörper vorliegt.

11. Verfahren nach einem der Ansprüche 7-10, wobei der mineralische Dämmstoff Mineralwolle ist.

12. Verfahren nach einem der Ansprüche 7-11, wobei die aminofunktionelle Organosiliciumverbindung mindestens eine Verbindung der allgemeinen Formel (I)
**(SiO_{4/2})ₐ(R¹SiO_{3/2})_{b}(R²SiO_{3/2})_{b'}(R¹₂SiO_{2/2})_{c}(R¹R²Si₁O_{2/2})_{c'} (R²₂SiO_{2/2})_{c"}(R¹₃SiO_{1/2})_{d}(R¹₂R²SiO_{1/2})_{d'}(R¹R²₂SiO1_{/2})_{d"} (R²₃SiO_{1/2})_{d‴}** **(I)**,
ist, worin
die Indices **a, b, b', c, c', c", d, d', d"** und **d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d', d", d‴** zusammen mindestens den Wert 2 annimmt und wenigstens einer der Indices **b', c', c", d', d"** oder **d‴** ungleich 0 ist; und
worin die Reste **R¹** unabhängig voneinander ein unsubstituierter oder mit mindestens einem Fluor-, Chlor- oder Bromatom oder einer C₁-C₅-Alkoxygruppe substituierter C₁-C₁₈-Kohlenwasserstoffrest sind,
und worin die Reste **R²** eine Gruppe der allgemeinen Formel **(II)** bedeuten
**-R-[NR'(CH₂)ₙ]ₐN(R')₂** **(II),**
worin
der Index **n** die Werte 2,3,4,5, oder 6 annimmt,
der Index **a** die Werte 0,1,2,3, oder 4 annimmt,
der Rest **R** ein zweiwertiger, linearer, unverzweigter oder verzweigter C₁-C₁₈-Kohlenwasserstoffrest ist,
die Reste **R'** unabhängig voneinander ausgewählt sind aus der Gruppe bestehend aus (i) Wasserstoff, (ii) unsubstituierter oder mit mindestens einem Fluor-, Chlor- oder Bromatom oder einer Hydroxygruppe oder einer C₁-C₅-Alkoxygruppe substituierter C₁-C₁₈-Kohlenwasserstoffrest, oder (iii) unsubstituierter oder mit mindestens einem Fluor-, Chlor- oder Bromatom oder einer Hydroxygruppe oder einer C₁-C₅-Alkoxygruppe substituierter C₁-C₁₈-Acylrest.

## Claims

1. Hydrophobic mineral insulants comprising at least one amino-functional organosilicon compound having an amine number as defined in the description in the range from 0.05 to 0.40.

2. Hydrophobic mineral insulants according to Claim 1, where the amino-functional organosilicon compound is at least one compound of the general formula **(I)**
**(SiO_{4/2})ₐ(R¹SiO_{3/2})_{b}(R²SiO_{3/2})_{b'}(R¹₂SiO_{2/2})_{c}(R¹R²SiO_{2/2})_{c'} (R²₂SiO_{2/2})_{c"}(R¹₃SiO_{1/2})_{d}(R¹₂R²SiO_{1/2})_{d'}(R¹R²₂SiO_{1/2})_{d"} (R²₃SiO_{1/2})_{d‴}** **(I),**
in which
the indices **a, b, b `, c, c', c", d, d', d"** and **d‴** indicate the number of the respective siloxane unit in the compound and independently of one another are an integer in the range from 0 to 100 000, with the proviso that the sum of **a, b, b', c, c', c", d, d', d", d‴** together adopts a value of at least 2, and at least one of the indices **b', c', c", d', d"** or **d‴** is other than 0; and
in which the radicals **R¹** independently of one another are a C₁-C₁₈ hydrocarbon radical which is unsubstituted or substituted by at least one fluorine, chlorine or bromine atom or by a C₁-C₅ alkoxy group,
and in which the radicals **R²** are a group of the general formula **(II)**
**-R-[NR'(CH₂)ₙ]ₐN(R')₂** **(II),**
in which
the index **n** adopts the values 2, 3, 4, 5 or 6,
the index **a** adopts the values 0, 1, 2, 3 or 4,
the radical **R** is a divalent, linear, unbranched or branched C₁-C₁₈ hydrocarbon radical,
the radicals **R'** independently of one another are selected from the group consisting of (i) hydrogen, (ii) C₁-C₁₈ hydrocarbon radical which is unsubstituted or substituted by at least one fluorine, chlorine or bromine atom or by a hydroxyl group or by a C₁-C₅ alkoxy group, or (iii) C₁-C₁₈ acyl radical which is unsubstituted or substituted by at least one fluorine, chlorine or bromine atom or by a hydroxyl group or by a C₁-C₅ alkoxy group.

3. Hydrophobic mineral insulants according to Claim 2, where: in formula **(I)** the radicals **R¹** independently of one another are a C₁-C₆ alkyl radical; and in formula **(II)** the index **a** adopts a value of 1, the index **n** adopts a value of 2, the radicals **R'** are hydrogen, and the radical **R** is a divalent C₁-C₆ hydrocarbon radical.

4. Use of amino-functional organosilicon compounds having an amine number as defined in the description in the range from 0.05 to 0.40 for hydrophobicizing mineral insulants.

5. Use according to Claim 4, where the mineral insulants are selected from expanded clay, calcium silicates such as vermiculite, mineral foam, perlites, foamed glass, mineral wools such as rockwool and glass wool.

6. Use according to Claim 4 or 5, where the amino-functional organosilicon compounds are used in the form of emulsions.

7. Method for hydrophobicizing mineral insulants, comprising the steps of
a) providing an aqueous emulsion comprising at least one amino-functional organosilicon compound having an amine number in the range from 0.05 to 0.40,
b) contacting a mineral insulant with an emulsion according to (a), and
c) drying.

8. Method according to Claim 7, where the active content of the emulsion is at least 0.01 wt%.

9. Method according to Claim 7 or 8, where the pH of the emulsion is 3-9.

10. Method according to any of Claims 7-9, where the mineral insulant is in the form of binder-free mineral wool ("blowing wool"), as binder-containing fibres, as mats, as sheets or as other shaped articles.

11. Method according to any of Claims 7-10, where the mineral insulant is mineral wool.

12. Method according to any of Claims 7-11, where the amino-functional organosilicon compound is at least one compound of the general formula **(I)**
**(SiO_{4/2})ₐ(R¹SiO_{3/2})_{b}(R²SiO_{3/2})_{b'}(R¹₂SiO_{2/2})_{c}(R¹R²SiO_{2/2})_{c'} (R²₂SiO_{2/2})_{c"}(R¹₃SiO_{1/2})_{d}(R¹₂R²SiO_{1/2})_{d'}(R¹R²₂SiO_{1/2})_{d"} (R²₃SiO_{1/2})_{d‴}** **(I),**
in which
the indices **a, b, b `, c, c', c", d, d', d"** and **d‴** indicate the number of the respective siloxane unit in the compound and independently of one another are an integer in the range from 0 to 100 000, with the proviso that the sum of **a, b, b', c, c', c'', d, d', d", d‴** together adopts a value of at least 2, and at least one of the indices **b', c', c", d', d"** or **d‴** is other than 0; and
in which the radicals **R¹** independently of one another are a C₁-C₁₈ hydrocarbon radical which is unsubstituted or substituted by at least one fluorine, chlorine or bromine atom or by a C₁-C₅ alkoxy group,
and in which the radicals **R²** are a group of the general formula **(II)**
**-R-[NR'(CH₂)ₙ]ₐN(R')₂** **(II),**
in which
the index **n** adopts the values 2, 3, 4, 5 or 6,
the index **a** adopts the values 0, 1, 2, 3 or 4,
the radical **R** is a divalent, linear, unbranched or branched C₁-C₁₈ hydrocarbon radical,
the radicals **R'** independently of one another are selected from the group consisting of (i) hydrogen, (ii) C₁-C₁₈ hydrocarbon radical which is unsubstituted or substituted by at least one fluorine, chlorine or bromine atom or by a hydroxyl group or by a C₁-C₅ alkoxy group, or (iii) C₁-C₁₈ acyl radical which is unsubstituted or substituted by at least one fluorine, chlorine or bromine atom or by a hydroxyl group or by a C₁-C₅ alkoxy group.

## Revendications

1. Matériaux isolants minéraux hydrophobes contenant au moins un composé organosilicié fonctionnalisé par amino doté d'un indice d'amine comme défini dans la description dans la plage de 0,05 à 0,40.

2. Matériaux isolants minéraux hydrophobes selon la revendication 1, le composé organosilicié fonctionnalisé par amino étant au moins un composé de formule générale **(I)**
**(SiO_{4/2})ₐ(R¹SiO_{3/2})_{b}(R²SiO_{3/2})_{b'}(R¹₂SiO_{2/2})_{c}(R¹R²SiO_{2/2})_{c'} (R²₂SiO_{2/2})_{c"}(R¹₃SiO_{1/2})_{d}(R¹₂R²SiO_{1/2})_{d'}(R¹R²₂SiO_{1/2})_{d"} (R²₃SiO_{1/2})_{d‴}** **(I)**,
dans laquelle les indices a, b, b', c, c', c'', d, d', d'' et d' ' ' indiquent le nombre du motif de siloxane respectif dans le composé et signifient indépendamment les uns des autres un nombre entier dans la plage de 0 à 100 000, à la condition que la somme de a, b, b', c, c', c", d, d', d", d‴ prenne au moins la valeur 2 et au moins l'un des indices b', c', c", d', d" ou d‴ soit différent de 0 ; et
dans laquelle les radicaux R¹ sont indépendamment les uns des autres un radical hydrocarboné en C₁₋₁₈ non substitué ou substitué par au moins un atome de fluor, de chlore ou de brome ou un groupe alcoxy en C₁₋₅,
et dans laquelle les radicaux R² signifient un groupe de formule générale (II)
**-R-[NR'(CH₂)ₙ]ₐN(R')₂** **(II),**
dans laquelle
l'indice n prend les valeurs 2, 3, 4, 5 ou 6,
l'indice a prend les valeurs 0, 1, 2, 3 ou 4,
le radical R est un radical hydrocarboné divalent en C₁₋₁₈ linéaire, non ramifié ou ramifié,
les radicaux R' sont choisis indépendamment les uns des autres dans le groupe constitué par (i) hydrogène, (ii) un radical hydrocarboné en C₁₋₁₈ non substitué ou substitué par au moins un atome de fluor, de chlore ou de brome ou un groupe hydroxy ou un groupe alcoxy en C₁₋₅, ou (iii) un radical acyle en C₁₋₁₈ non substitué ou substitué par au moins un atome de fluor, de chlore ou de brome ou un groupe hydroxy ou un groupe alcoxy en C₁₋₅.

3. Matériaux isolants minéraux hydrophobes selon la revendication 2, ce qui suit s'appliquant : dans la formule (I) les radicaux R¹ sont indépendamment les uns des autres un radical alkyle en C₁₋₆ ; et dans la formule (II) l'indice a prend la valeur 1, l'indice n prend la valeur 2, les radicaux R' sont hydrogène, et le radical R est un radical hydrocarboné divalent en C₁₋₆.

4. Utilisation de composés organosiliciés fonctionnalisés par amino dotés d'un indice d'amine comme défini dans la description dans la plage de 0,05 à 0,40 pour l'hydrophobisation de matériaux isolants minéraux.

5. Utilisation selon la revendication 4, les matériaux isolants minéraux étant choisis parmi l'argile expansée, les silicates de calcium comme la vermiculite, une mousse minérale, les perlites, le verre cellulaire, les laines minérales comme la laine de roche et la laine de verre.

6. Utilisation selon la revendication 4 ou 5, les composés organosiliciés fonctionnalisés par amino étant utilisés sous forme d'émulsions.

7. Procédé d'hydrophobisation de matériaux isolants minéraux comprenant les étapes de
a) mise à disposition d'une émulsion aqueuse contenant au moins un composé organosilicié fonctionnalisé par amino doté d'un indice d'amine dans la plage de 0,05 à 0,40,
b) mise en contact d'un matériau isolant minéral avec une émulsion selon (a), et
c) séchage.

8. Procédé selon la revendication 7, le contenu actif de l'émulsion étant d'au moins 0,01 % en poids.

9. Procédé selon la revendication 7 ou 8, la valeur de pH de l'émulsion étant de 3 à 9.

10. Procédé selon l'une quelconque des revendications 7 à 9, le matériau isolant minéral étant présent sous forme de laine minérale sans liant (« Blowing Wool » - « laine à souffler »), en tant que fibres contenant un liant, en tant que mats, en tant que plaques ou en tant qu'un autre corps moulé.

11. Procédé selon l'une quelconque des revendications 7 à 10, le matériau isolant minéral étant la laine minérale.

12. Procédé selon l'une quelconque des revendications 7 à 11, le composé organosilicié fonctionnalisé par amino étant au moins un composé de formule générale (I)
**(SiO_{4/2})ₐ(R¹SiO_{3/2})_{b}(R²SiO_{3/2})_{b'}(R¹₂SiO_{2/2})_{c}(R¹R²SiO_{2/2})_{c'} (R²₂SiO_{2/2})_{c"}(R¹₃SiO_{1/2})_{d}(R¹₂R²SiO_{1/2})_{d'}(R¹R²₂SiO_{1/2})_{d"} (R²₃SiO_{1/2})_{d‴}** **(I)**,
dans laquelle les indices a, b, b', c, c', c", d, d', d" et d‴ indiquent le nombre du motif de siloxane respectif dans le composé et signifient indépendamment les uns des autres un nombre entier dans la plage de 0 à 100 000, à la condition que la somme de a, b, b', c, c', c", d, d', d", d‴ prenne au moins la valeur 2 et au moins l'un des indices b', c', c", d', d" ou d‴ soit différent de 0 ; et
dans laquelle les radicaux R¹ sont indépendamment les uns des autres un radical hydrocarboné en C₁₋₁₈ non substitué ou substitué par au moins un atome de fluor, de chlore ou de brome ou un groupe alcoxy en C₁₋₅,
et dans laquelle les radicaux R² signifient un groupe de formule générale (II)
**-R-[NR'(CH₂)ₙ]ₐN(R')₂** **(II),**
dans laquelle
l'indice n prend les valeurs 2, 3, 4, 5 ou 6,
l'indice a prend les valeurs 0, 1, 2, 3 ou 4,
le radical R est un radical hydrocarboné divalent en C₁₋₁₈ linéaire, non ramifié ou ramifié,
les radicaux R' sont choisis indépendamment les uns des autres dans le groupe constitué par (i) hydrogène, (ii) un radical hydrocarboné en C₁₋₁₈ non substitué ou substitué par au moins un atome de fluor, de chlore ou de brome ou un groupe hydroxy ou un groupe alcoxy en C₁₋₅, ou (iii) un radical acyle en C₁₋₁₈ non substitué ou substitué par au moins un atome de fluor, de chlore ou de brome ou un groupe hydroxy ou un groupe alcoxy en C₁₋₅.
